# EUROPEAN PATENT APPLICATION

(11) **EP 2 978 247 A1**
(43) Date of publication of application: **27.01.2016**
(21) Application number: 13878648.8
(22) Date of filing: 31.12.2013
(51) Int. Cl.: H04W 8/02

(54) **TERMINAL REGISTRATION METHOD, TERMINAL DISCOVERY METHOD, TERMINAL AND DEVICE**

(30) Priority: 20.03.2013 CN 201310090160
(71) Applicant: ZTE Corporation, Shenzhen, Guangdong 518057 (CN)
(72) Inventor: ZHU, Jinguo, Shenzhen Guangdong 518057 (CN); ZONG, Zaifeng, Shenzhen Guangdong 518057 (CN); WANG, Jing, Shenzhen Guangdong 518057 (CN)
(74) Representative: Modiano, Micaela Nadia
(86) International application number: PCT/CN2013/091162
(87) International publication number: WO 2014/146474

(57) **Abstract**

Provided are a terminal registration method, terminal discovery methods, a terminal and a service device. The service device includes: a registration component (22), configured to accept registration of a terminal, assign a Proximity-based Services identifier (ProSe ID) to the terminal, and associate application information of the terminal with the ProSe ID, wherein the application information includes information for identifying an application; a discovery component (24), configured to instruct a base station to assign discovery resources to the terminal, and send a discovery result, wherein the discovery resources are used for discovery between terminals. By setting a ProSe service component, the technical solution provides the support for ProSe services in the aspect of network architecture.

## Description

### Technical Field

The present disclosure relates to the field of communications, and in particular to a terminal registration method, terminal discovery methods, a service device, a base station, an application server and a terminal.

### Background

Terminals in proximity areas utilizing Device to Device (D2D) direct communications can bring many benefits to the terminals. A D2D-relevant topic in the 3rd Generation Partnership Project (3GPP) is called Proximity-based Services (ProSe), which mainly focuses on how to implement a D2D service under the Long Term Evolution (LTE) and the Evolved Packet Core (EPC) architecture. The so-called ProSe communication in the present disclosure is D2D communication, and the both concepts are equivalent.

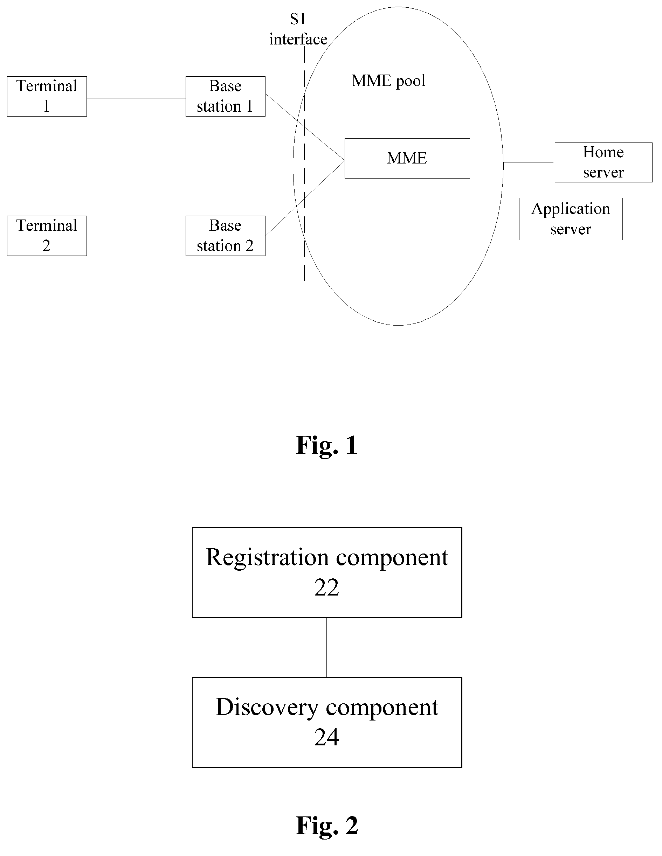

Fig. 1 is a schematic diagram of the framework of a network system according to the related art. Fig. 1 shows a typical 3GPP architecture, wherein network elements involved in Fig. 1 are as follows in detail.

The terminal is also called User Equipment (UE) and accesses a base station wirelessly, wherein the terminal is in intercommunication with a mobility management element of a core network via an interface.

The base station is also called an eNodeB (Evolved NodeB) in an evolved system and mainly provides wireless resources for the access of terminals, and is in intercommunication with the mobility management element of the core network via an interface.

The Mobility Management Element (MME) is a control plane entity of a visited location and a server temporarily storing user data, and is responsible for managing and storing UE context (e.g., a UE/user identifier, mobility context, a user security parameter and bearer context, etc.) and performing authentication on terminals. In order to implement load sharing and disaster recovery on all the mobility management elements in an area, the 3GPP defines a concept of mobility management element pool. All the MMEs in the pool are interconnected to all the base stations. The mobility management element assigns a Globally Unique Temporary Identity (GUTI) for a user. The GUTI may include: a network identifier, a pool identifier, a mobility management element identifier and a user identifier. The MME which assigns the GUTI can be uniquely determined by the GUTI.

The home server is located in a home network and mainly functions to provide subscription information and authorization. When a user accesses the mobility management element from the visited location, it is necessary to obtain authentication information from the home server and perform authorization on the terminal, and continue to obtain subscription information from the home server if the authorization succeeds. In addition, the home server also checks whether the user is allowed to roam to a mobility management element of a visited network.

In the related art, no relevant processing regarding how to perform ProSe under the existing network architecture before a ProSe communication is established is proposed.

### Summary

A terminal registration method, terminal discovery methods, a service device, a base station, an application server and a terminal are provided in the embodiments of the present disclosure so as to at least solve one of the above-mentioned problems.

According to one aspect of the embodiments of the present disclosure, a terminal registration method is provided, including: receiving, by a proximity-based service (ProSe) service component, a message which is sent by a terminal and used for performing ProSe registration, wherein the message carries application information of the terminal, the application information including information for identifying an application; and assigning, by the ProSe service component, a proximity service identifier (ProSe ID), and sending the ProSe ID to the terminal.

In an example embodiment, the ProSe service component is a mobility management element (MME), which supports a ProSe service, in an MME pool.

In an example embodiment, before receiving, by the ProSe service component, the message which is sent by the terminal and used for performing the ProSe registration, the method further includes: receiving, by a base station, a non-access stratum (NAS) message sent by the terminal, wherein the base station learns, in a radio resource control (RRC) process, that the NAS message is a message used for performing the ProSe registration; and selecting, by the base station, one ProSe service component, and sending the NAS message to the ProSe service component via an interface between the base station and the selected ProSe service component.

In an example embodiment, before receiving, by the ProSe service component, the message which is sent by the terminal and used for performing the ProSe registration, the method further includes: acquiring, by the terminal, the application information from an application server.

In an example embodiment, acquiring, by the terminal, the application information from the application server includes: sending, by the terminal in the case where the application starts, a registration message to the application server, wherein the registration message carries an application user identifier; and receiving, by the terminal, the application information which is sent by the application server after the terminal registration is accepted.

In an example embodiment, before receiving, by the ProSe service component, the message which is sent by the terminal and used for performing the ProSe registration, the method further includes: acquiring, by the terminal, information indicating whether an MME pool supports the ProSe service.

In an example embodiment, acquiring, by the terminal, information indicating whether the MME pool supports the ProSe service includes: receiving, by the terminal, a registration response message or tracking area update message sent by an MME, wherein the registration response message or the tracking area update message carries information indicating whether an MME pool supports a ProSe service.

In an example embodiment, assigning, by the ProSe service component, the ProSe ID includes: judging, by the ProSe service component according to the information for identifying the application, whether an operator allows the application to use a ProSe service; and assigning, by the ProSe service component in the case where a judgement result is that the operator allows the application to use the ProSe service, the ProSe ID.

In an example embodiment, after sending, by the ProSe service component, the ProSe ID to the terminal, the method further includes: acquiring, by the application server, the ProSe ID, and associating and storing the ProSe ID and an acquired application user identifier of the terminal.

In an example embodiment, the ProSe ID includes at least one of the following: a network identifier, an MME pool identifier, an identifier which uniquely identifies the ProSe service component in an MME pool, an identifier which uniquely identifies a user in the ProSe service component, and an identifier which uniquely identifies the application in user context.

In an example embodiment, the ProSe ID further includes: indication information indicating whether discovery resources have been assigned for the terminal corresponding to the ProSe ID.

According to another aspect of the embodiments of the present disclosure, a terminal discovery method is provided, including: receiving a message by which a source terminal requests to discover a target terminal, wherein the message carries a proximity-based service identifier (ProSe ID) of the target terminal; and instructing a first base station to which the source terminal belongs and/or a second base station to which the target terminal belongs to assign discovery resources or configure discovery resources that have already been assigned, wherein the discovery resources are used for enabling one of the source terminal and the target terminal to discover the other terminal.

In an example embodiment, receiving the message and instructing the first base station and/or the second base station to assign or configure the discovery resources includes: receiving, by a first ProSe service component corresponding to the source terminal, the message; and instructing, by the first ProSe service component, the first base station to assign or configure the discovery resources, wherein the discovery resources are used for enabling the target terminal to discover the source terminal.

In an example embodiment, after instructing, by the first ProSe service component, the first base station to assign or configure the discovery resources, the method further includes: sending, by the first ProSe service component, the ProSe ID of the target terminal and the discovery resources to a second ProSe service component corresponding to the target terminal; and instructing, by the second ProSe service component, the second base station to assign the discovery resources to the target terminal, wherein the discovery resources are used for enabling the target terminal to discover the source terminal.

In an example embodiment, receiving the message and instructing the first base station and/or the second base station to assign or configure the discovery resources includes: receiving, by a second ProSe service component corresponding to the target terminal, the message; and instructing, by the second ProSe service component, the second base station to assign or configure the discovery resources, wherein the discovery resources are used for enabling the source terminal to discover the target terminal.

In an example embodiment, after receiving the message and instructing, by the second ProSe service component, the second base station to assign or configure the discovery resources, the method further includes: sending, by the second ProSe service component, the discovery resources to a first ProSe service component corresponding to the source terminal; and instructing, by the first ProSe service component, the first base station to assign the discovery resources to the source terminal, wherein the discovery resources are used for enabling the source terminal to discover the target terminal.

In an example embodiment, the method further includes: judging whether the discovery resources have been assigned for the terminal according to a format of the ProSe ID.

In an example embodiment, after instructing the first base station and/or the second base station to assign or configure the discovery resources, the method further includes: after one of the source terminal and the target terminal discovers the other terminal, notifying, by the discovering terminal, the discovered terminal through a ProSe service component corresponding to the discovering terminal.

In an example embodiment, one of the source terminal and the target terminal discovering the other terminal includes: discovering, by one of the source terminal and the target terminal, the other terminal by detecting on the discovery resources a discovery signal sent by the other terminal.

In an example embodiment, the discovery signal includes at least one of the following: a pilot frequency signal assigned for a terminal by a base station, a ProSe ID of the source terminal, and a ProSe ID of the target terminal.

According to another aspect of the embodiments of the present disclosure, a terminal discovery method is provided, including: receiving, by a proximity-based service (ProSe) service component, a message sent by a source terminal, wherein the message carries application information, the application information being used for requesting to discover one or more terminals in proximity to the source terminal; acquiring, by the ProSe service component according to the application information, one or more proximity-based service identifiers (ProSe ID) of one or more terminals in proximity to the source terminal; and sending, by the ProSe service component, the one or more ProSe IDs of the one or more terminals to the source terminal.

In an example embodiment, acquiring, by the ProSe service component according to the application information, the one or more ProSe IDs of the one or more terminals in proximity to the source terminal includes: acquiring, by the ProSe service component according to the application information, a ProSe ID associated with an application corresponding to the application information; and acquiring, by the ProSe service component according to at least one of a latest access cell, a tracking area and a location area of a terminal corresponding to the ProSe ID associated with the application, the one or more ProSe IDs of the one or more terminals in proximity to the source terminal.

In an example embodiment, acquiring, by the ProSe service component according to the application information, the one or more ProSe IDs of the one or more terminals in proximity to the source terminal includes: instructing, by the ProSe service component, a base station to which the source terminal belongs to assign discovery resources for the source terminal; sending, by the ProSe service component, the discovery resources to one or more base stations to which the one or more terminals belong, and configuring, by the one or more base stations, the discovery resources to the one or more terminals, wherein the discovery resources are used for enabling the one or more terminals to detect a discovery signal of the source terminal; and acquiring, by the ProSe service component, the one or more ProSe IDs of the one or more terminals in proximity to the source terminal by means of reports sent by one or more terminals which receive the discovery signal.

In an example embodiment, after sending, by the ProSe service component, the one or more ProSe IDs of the one or more terminals to the source terminal, the method further includes: sending, by the source terminal, the one or more ProSe IDs of the one or more terminals to an application server.

According to another aspect of the embodiments of the present disclosure, a terminal discovery method is provided, including: receiving, by a proximity-based service (ProSe) service component, a discovery resource assignment request sent by a source terminal; and instructing, by the ProSe service component, a base station to which the source terminal belongs to assign discovery resources for the source terminal, wherein the discovery resources are used for enabling other terminals to discover the source terminal.

In an example embodiment, the method further includes: assigning, by the ProSe service component, a new ProSe ID for the source terminal, wherein the new ProSe ID includes: information for indicating that discovery resources have been assigned for the source terminal; and sending, by the ProSe service component, the new ProSe ID to the source terminal.

In an example embodiment, the method further includes: receiving, by ProSe service components corresponding to said other terminals, request messages sent by said other terminals, wherein the request messages are used for requesting whether the new ProSe ID is in proximity areas of said other terminals; determining, by the ProSe service components corresponding to said other terminals according to the new ProSe ID, that the discovery resources have been assigned for the source terminal; and instructing, by the ProSe service components corresponding to said other terminals, base stations to which said other terminals belong to assign the discovery resources to said other terminals.

In an example embodiment, before receiving, by the ProSe service components corresponding to said other terminals, the request messages sent by said other terminals, the method further includes: acquiring, by said other terminals, the new ProSe ID from the application server.

In an example embodiment, discovering the source terminal by said other terminals includes: discovering, by said other terminals, the source terminal by detecting on the discovery resources a discovery signal sent by the source terminal.

In an example embodiment, the discovery signal includes at least one of the following: a pilot frequency signal assigned for a terminal by a base station, and a ProSe ID of the source terminal.

According to another aspect of the embodiments of the present disclosure, a service device is provided, including: a registration component, configured to accept registration of a terminal, assign a proximity-based service identifier (ProSe ID) for the terminal, and associate application information of the terminal with the ProSe ID, wherein the application information includes information for identifying an application; and a discovery component, configured to instruct a base station to assign discovery resources for the terminal, and send a discovery result, wherein the discovery resources are used for discovery between terminals.

In an example embodiment, the discovery component is further configured to store the discovery resources, and return the discovery resources when receiving a request.

In an example embodiment, the registration component is further configured to check a digital signature of application information provided by the terminal.

In an example embodiment, the registration component is further configured to verify whether an application corresponding to the application information allows a ProSe service.

In an example embodiment, the discovery result includes: a list composed of one or more ProSe IDs associated with the application information, wherein the one or more ProSe IDs in the list are determined according to location information of a terminal.

In an example embodiment, the service device is a mobility management element (MME) which supports a ProSe service.

According to another aspect of the embodiments of the present disclosure, an application server is provided, including: a registration component, configured to return application information during register of a terminal, wherein the application information includes information for identifying an application; and a storage component, configured to store a corresponding relationship between an application user identifier of the application and a proximity-based service identifier (ProSe ID) and return the application user identifier and/or the ProSe ID according to a request of the terminal.

In an example embodiment, the application information further includes: a digital signature.

According to another aspect of the embodiments of the present disclosure, a base station is provided, including: an assignment component, configured to receive an instruction from a proximity-based service (ProSe) service component and assign discovery resources for a terminal, wherein the instruction is used for instructing the base station to assign the discovery resources, and the discovery resources are used for discovery between terminals; and/or a configuration component, configured to configure the discovery resources received from the ProSe service component to the terminal.

In an example embodiment, the discovery resources are used for sending a discovery signal, wherein a terminal is discovered by detecting the discovery signal.

In an example embodiment, the discovery signal includes at least one of the following: a pilot frequency signal assigned for a terminal by a base station, and a ProSe ID of the terminal.

In an example embodiment, the base station further includes: a sending component, configured to receive a message used for performing the ProSe registration from the terminal in an RRC process, select one ProSe service component and forward the message used for performing the ProSe registration to the selected ProSe service component.

According to another aspect of the embodiments of the present disclosure, a terminal is provided, including: a registration component, configured to register with a proximity-based service (ProSe) service component according to application information, wherein the application information includes information for identifying an application; and a storage component, configured to store a proximity-based service identifier (ProSe ID) assigned by the ProSe service component.

In an example embodiment, the terminal further includes: an acquisition component, configured to acquire, from an application server, at least one of the following: a ProSe ID corresponding to a target terminal, and an application user identifier corresponding to a target terminal.

In an example embodiment, the terminal further includes: a sending component, configured to send the ProSe ID to the application server.

By setting a ProSe service component, the embodiments of the present disclosure provides the support for ProSe services in the aspect of network architecture.

### Brief Description of the Drawings

Drawings, provided for further understanding of the embodiments of the present disclosure and forming a part of the specification, are used to explain the present disclosure together with embodiments of the present disclosure rather than to limit the present disclosure. In the accompanying drawings:
Fig. 1 is a schematic diagram of the framework of a network system according to the related art;
Fig. 2 is a structural block diagram of a service device according to an embodiment of the present disclosure;
Fig. 3 is a structural block diagram of an application server according to an embodiment of the present disclosure;
Fig. 4 is a structural block diagram of a base station according to an embodiment of the present disclosure;
Fig. 5 is a structural block diagram of a terminal according to an embodiment of the present disclosure;
Fig. 6 is a schematic diagram of a network architecture according to an embodiment of the present disclosure;
Fig. 7 is a flowchart of a terminal registration method according to an embodiment of the present disclosure;
Fig. 8 is flowchart one of a terminal discovery method according to an embodiment of the present disclosure;
Fig. 9 is flowchart two of a terminal discovery method according to an embodiment of the present disclosure;
Fig. 10 is flowchart three of a terminal discovery method according to an embodiment of the present disclosure;
Fig. 11 is a schematic flowchart of registration of a terminal with a ProSe server according to an embodiment of the present disclosure;
Fig. 12 is a schematic flowchart showing the case where terminal 1 intends to discover whether terminal 2 is in a proximity range according to an embodiment of the present disclosure;
Fig. 13 is a schematic flowchart showing the case where terminal 1 intends to discover all proximity user identifiers relevant to the current application according to an embodiment of the present disclosure; and
Fig. 14 is a schematic flowchart showing the case where terminal 1 actively applies for discover resources and terminal 2 discovers that terminal 1 is in a proximity range according to an embodiment of the present disclosure.

### Detailed Description of Embodiments

The present disclosure is described below in detail by reference to the accompanying drawings in conjunction with embodiments. Note that, the embodiments of the present disclosure and the features of the embodiments can be combined with each other if there is no conflict.

In the following embodiments, the discovery of a ProSe terminal is associated with an application, that is, when performing terminal discovery, the terminal which runs the same application can be discovered. Although terminals having different applications may be very near in distance, since they do not have the same application, mutual discovery may not be performed. Of course, if discovery is required, methods in the following embodiments can also be implemented. ProSe identifiers mentioned in the following embodiments may correspond to applications on terminals. In the following embodiments, resources for terminal discovery are called discovery resources, and in the case where some of the embodiments below involve a wireless network coverage, the assignment of discovery resources is controlled by the network. In some of the embodiments, the case where an application layer may have a setting of whether black and white lists are allowed to be discovered is also described. The following embodiments take an EPC architecture as an example, but are not limited thereto, and a new architecture, an assignment method for ProSe identifiers of terminals, and terminal discovery methods are proposed. On the basis of the architecture and the ProSe identifiers, the function of ProSe discovery controlled by the network can be implemented. This architecture reduces the impacts on the EPC network as much as possible.

In an embodiment, a service device is provided. The function implemented by the service device is a function newly added relative to the existing EPC network. The service device may exist as an independent server which is coupled with an MME; the service device may also serve as a functional component of an existing network element, for example, the service device may serve as a functional component in the MME; and the service device may also be implemented by updating the existing network element to support the functions described below, for example, it may be the MME which is updated, that is, the service device may be an MME which supports a ProSe service in an MME pool. In some of the following embodiments, the service device is called a ProSe service component, or called as a ProSe server. There may exist one or more ProSe servers or components; the ProSe server or component may exist separately, and may also exist as a server group or a service component group. Components mentioned in the following embodiments may be implemented as components in a processor, may be implemented as software components, and may also be implemented using hardware components. For example, the service device mentioned in the following embodiments includes a registration component and a discovery component, which may also be implemented using a processor, that is, the service device may include a processor, which processor includes a registration component and a discovery component.

Fig. 2 is a structural block diagram of a service device according to an embodiment of the present disclosure. As shown in Fig. 2, the service device includes a registration component 22 and a discovery component 24.

The registration component 22 is configured to accept registration of a terminal, assign a proximity-based service identifier (ProSe ID) for the terminal, and associate application information of the terminal with the ProSe ID, wherein the application information includes information for identifying an application.

The discovery component 24 is configured to instruct a base station to assign discovery resources for the terminal, and send a discovery result, wherein the discovery resources are used for discovery between terminals. In an example embodiment, the discovery result may include one or more ProSe IDs, which, for example, may be arranged as a list, wherein the one or more ProSe IDs in the list are determined according to location information of a terminal. By means of the example implementation, a plurality of proximity terminals can be discovered.

The names of the above-mentioned registration component 22 and discovery component 24 do not form limitation, and components which can implement the functions of the two components can all be called a registration component and a discovery component. For example, the registration component may be called: a component configured to accept registration of a terminal, assign a ProSe ID for the terminal and associate application information of the terminal and the ProSe ID. The above-mentioned registration component 22 and discovery component 24 may also be implemented by means of a processor, for example, a processor for accepting registration of a terminal, assigning a ProSe ID for the terminal and associating application information of the terminal and the ProSe ID. The following components should all be interpreted in this way, which will not be repeated again hereinafter.

By means of the above-mentioned service device, the registration of the terminal can be implemented and a base station is instructed to assign resources, so that support is provided for the implementation of a ProSe service on the network architecture.

In an example embodiment, the discovery component 24 may be further configured to store the discovery resources, and return the stored discovery resources when receiving a request. By means of the example implementation, the discovery component 24 may store the assigned discovery resource and ensure that the base station is instructed to configure the assigned discovery resources. The function of storing and returning the discovery resources may be implemented by means of any component.

In an example embodiment, the application information may also include a digital signature. In this case, the registration component 22 may also be configured to check the digital signature. The function of checking a digital signature may also be implemented by means of any component.

In an example embodiment, in order to save the flow or resources, whether an application corresponding to application information allows a ProSe service can be verified. For example, the function may be implemented by means of the registration component 22.

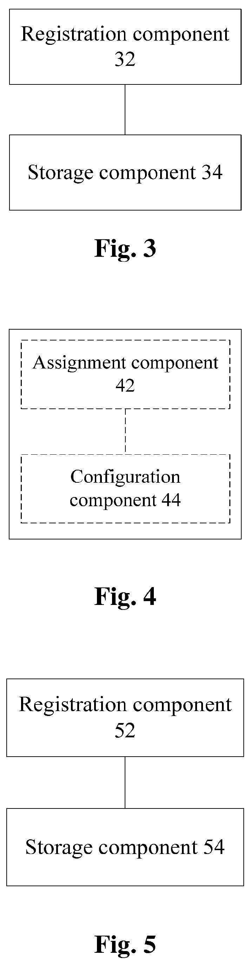

Fig. 3 is a structural block diagram of an application server according to an embodiment of the present disclosure. As shown in Fig. 3, the application server includes: a registration component 32 and a storage component 34.

The registration component 32 is configured to return application information during register of a terminal, wherein the application information includes information for identifying an application; and
the storage component 34 is configured to store a corresponding relationship between an application user identifier of the application and a ProSe ID and return the application user identifier and/or the ProSe ID according to a request of the terminal.

The application information includes information for identifying an application, for example, an identifier is used to show that the application is a network chat tool A. In an example embodiment, the application information may also include a digital signature. An application user identifier represents a user identifier used in the application, for example, a user name used in the network chat tool A.

Fig. 4 is a structural block diagram of a base station according to an embodiment of the present disclosure. As shown in Fig. 4, the base station includes: at least one of an assignment component 42 and a configuration component 44. The dotted lines in the drawing represent that at least one of the two components needs to exist.

The assignment component 42 is configured to receive an instruction from a proximity-based service (ProSe) service component and assign discovery resources for a terminal, wherein the instruction is used for instructing the base station to assign the discovery resources, and the discovery resources are used for discovery between terminals. In an example embodiment, the discovery resources are used for sending a discovery signal, wherein a terminal is discovered by detecting the discovery signal. For example, the discovery signal may include at least one of the following: a pilot frequency signal assigned for a terminal by a base station, and a ProSe ID of a terminal (including a source terminal and/or a target terminal).

The configuration component 44 is configured to configure the discovery resources received from the ProSe service component to the terminal.

In an example embodiment, the base station may also include: a sending component, configured to receive a message used for performing the ProSe registration from the terminal in an RRC process, and forward the message for performing the ProSe registration to the selected ProSe service component after selecting one ProSe service component.

Fig. 5 is a structural block diagram of a terminal according to an embodiment of the present disclosure. As shown in Fig. 5, the terminal includes: a registration component 52 and a storage component 54.

The registration component 52 is configured to register with a proximity-based service (ProSe) service component according to application information, wherein the application information includes information for identifying an application.

The storage component 54 is configured to store a proximity-based service identifier (ProSe ID) assigned by the ProSe service component.

The terminal having the above-mentioned components can provide support for the implementation of a ProSe service.

In an example embodiment, the terminal may further include: an acquisition component, configured to acquire, from an application server, at least one of the following: a ProSe ID corresponding to a target terminal, and an application user identifier corresponding to a target terminal.

In an example embodiment, the terminal may further include: a sending component, configured to send the ProSe ID to the application server.

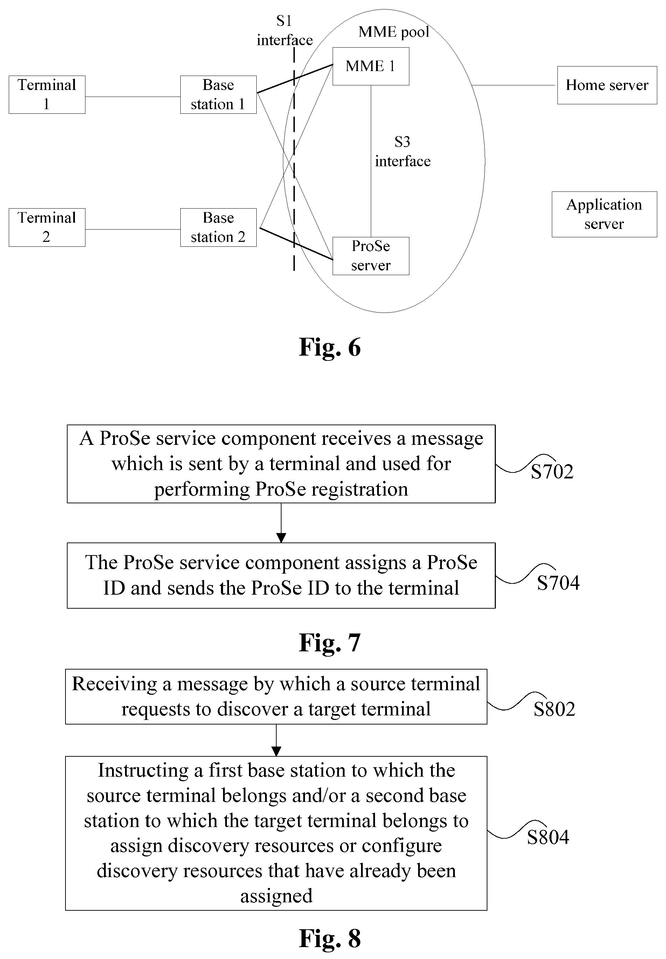

Fig. 6 is a schematic diagram of a network architecture according to an embodiment of the present disclosure. Fig. 6 shows an example network architecture, and in the network architecture, the ProSe server is deployed separately and is coupled with an MME. Network elements in the example network architecture are described below.

### ProSe server:

The ProSe server includes a ProSe registration function and a ProSe discovery function. For example, the ProSe discovery function may be responsible for triggering a discovery process to judge whether a target terminal is in a proximity area. The discovery process may include: requesting a base station to assign discovery resources, configuring the discovery resources to the target terminal via the base station, and returning a discovery result of the target terminal to a source terminal. In an example embodiment, the ProSe discovery function may further include requesting the base station to assign discovery resources according to user requirements and store the discovery resources, and return the discovery resources when other terminals send a request. For example, the ProSe registration function is responsible for the registration of a ProSe terminal, assigning a temporary identifier ProSe ID, and associating a corresponding relationship between user application information and the ProSe ID. In an example embodiment, the ProSe registration function may also include checking a digital signature of the application information provided by the terminal. In an example embodiment, the ProSe registration function may also include verifying whether the application allows a ProSe service.

In an example embodiment, the discovery function may also include generating a list of all the ProSe IDs associated with the corresponding application information, for example, generating a list of all the ProSe IDs associated with the corresponding application information according to location information of the target terminal.

In an example embodiment, the ProSe server may also have an MME function, and be coupled with the base station via an S 1 interface.

### Application server supporting a ProSe service:

The application server returns application information during register of a terminal, stores a corresponding relationship between a ProSe ID and an application user ID, and returns a corresponding ID to a terminal according to a request from a terminal. In an example embodiment, the application information may also include a digital signature.

### ProSe terminal:

The terminal is used for registering with the ProSe server, wherein a registration message carries application information; and is also used for storing the ProSe ID assigned by the ProSe server.

In an example embodiment, the terminal may acquire the application information from the application server before registering with the ProSe server. In an example embodiment, the application information may also include a digital signature.

In an example embodiment, the terminal may also send the ID assigned by the ProSe server to the application server which then stores the received ID.

In an example embodiment, the terminal may also acquire, from the application server, a ProSe ID corresponding to a target terminal, and/or an application user ID corresponding to a target terminal.

### Base station supporting ProSe:

The base station can receive, from the ProSe server, an instruction for assigning the discovery resources, and assign the discovery resources for the terminal; and/or, the base station can receive the discovery resources from the ProSe server and configure the discovery resources to the terminal as wireless resources by which the terminal receives data packets. The discovery resources may include wireless resources by which the terminal sends data packets, and a discovery signal. In an example embodiment, the discovery signal may include one of the following: a ProSe ID of the source terminal, a ProSe ID of the target terminal, and pilot frequency information assigned by the base station.

In an embodiment, a terminal registration method and a terminal discovery method are further provided, which are described below in conjunction with the drawings. It should be noted that each of the steps of the method involved below can be executed by components.

Fig. 7 is a flowchart of a terminal registration method according to an embodiment of the present disclosure. As shown in Fig. 1, the method includes the following steps:

Step S702: a ProSe service component receives a message which is sent by a terminal and used for performing ProSe registration, wherein the message carries application information of the terminal, the application information including information for identifying an application; and

Step S704, the ProSe service component assigns a ProSe ID and sends the ProSe ID to the terminal.

Through the above-mentioned steps, the assignment of the ProSe ID is implemented, wherein the ProSe ID corresponds to the application. In an example embodiment, the application information may be acquired from a network element which stores the information. For example, the application information may be acquired from the application server. An example acquisition manner may be as follows: in the case where the application starts, the terminal sends a registration message to the application server, wherein the registration message carries an application user identifier; and the terminal receives the application information which is sent by the application server after the terminal registration is accepted.

In the above-mentioned steps, the ProSe service component serves as a part of a mobility management element (MME), or the ProSe service component may also be deployed separately and be coupled with an MME, or the ProSe service component may be an MME which supports a ProSe service in the MME pool.

In an example embodiment, the registration may be performed by means of a non-access layer message (NAS message). For example, before the ProSe service component receives the message which is sent by the terminal and used for performing the ProSe registration, the method further includes:

Step S7002: the base station receives a non-access stratum (NAS) message which is sent by the terminal, wherein the NAS message is a message for performing ProSe registration, for example, the NAS message may be acquired in an RRC progress; and

step S7004: the base station sends the NAS message to the ProSe service component via an interface between the base station and the ProSe service component.

In order to save the flow or resources, or in order to enable the ProSe registration to be executed more effectively, in an example embodiment, before the ProSe service component receives the message which is sent by the terminal and used for performing ProSe registration, the method may further include: the terminal acquires information indicating whether the mobility management element supports a ProSe service. For example, the terminal may receive a registration response message or tracking area update message sent by the mobility management element, wherein the registration response message or the tracking area update message carries the information indicating whether the MME supports the ProSe service.

An operator may not allow some applications to use a ProSe service in consideration of factors such as the market. Considering the above, in an example embodiment, the ProSe service component may judge whether the operator allows the application to use a ProSe service according to the information for identifying the application; and then in the case where a judgement result is that the operator allows the application to use the ProSe service, the ProSe service component assigns the ProSe ID.

In an example embodiment, the method may further include: the application server acquires the ProSe ID, and associates and stores the ProSe ID and an acquired application user identifier of the terminal. In an example embodiment, the ProSe ID includes at least one of the following: a network identifier, a mobility management element pool identifier, an identifier which uniquely identifies the ProSe service component in an MME pool, an identifier which uniquely identifies a user in the ProSe service component, and an identifier which uniquely identifies the application in user context. In an example embodiment, the ProSe ID further includes: indication information indicating whether discovery resources have been assigned for the terminal corresponding to the ProSe ID, wherein the indication information is used for identifying whether the discovery resources have been assigned.

In one example embodiment, one ProSe server may be arranged in a mobility management element pool of a core network (as shown in Fig. 6); the ProSe server is coupled with all the base stations in the pool via interfaces. The terminal initiates ProSe registration with the ProSe server by means of a non-access layer message which carries application information and a temporary identifier of the terminal; and the ProSe server assigns a temporary identifier ProSe ID and returns the temporary identifier ProSe ID to the terminal which then stores the temporary identifier ProSe ID.

In an example embodiment, the terminal may acquire application information from the application server before registering with the ProSe server, wherein the information is able to identify this application uniquely.

In an example embodiment, the application information may further include a digital signature of the application. After receiving a registration request, the ProSe server checks whether the application identified by the application information is allowed by the operator to perform a ProSe service.

In an example embodiment, after obtaining the ProSe ID, the terminal may send the ProSe ID to the application server, and the application server may associate and store the ProSe ID and the application user identifier of the terminal.

In an example embodiment, before the terminal performs the ProSe registration, the core network may notify, by means of a registration response or a TAU response, the terminal of information about whether the mobility management element pool has supported the ProSe service.

Fig. 8 is flowchart one of a terminal discovery method according to an embodiment of the present disclosure. As shown in Fig. 8, the flow includes the steps of:

Step S802: receiving a message by which a source terminal requests to discover a target terminal, wherein the message carries a ProSe ID of the target terminal; and

step S804: instructing a first base station to which the source terminal belongs and/or a second base station to which the target terminal belongs to assign discovery resources or configure discovery resources that have already been assigned, wherein the discovery resources are used for enabling one of the source terminal and the target terminal to discover the other terminal.

By means of the above-mentioned steps, the discovery of a terminal can be implemented. During the discovery of the terminal, the discovery may be the discovery of the target terminal by the source terminal and may also be the discovery of the source terminal by the target terminal. The two example implementations are respectively described below.

Example implementation one: a first ProSe service component corresponding to the source terminal receives the above-mentioned message; and the first ProSe service component instructs the first base station to assign or configure the discovery resources, wherein the discovery resources are used for enabling the target terminal to discover the source terminal. In an example embodiment, after the first ProSe service component instructs the first base station to assign or configure the discovery resources, the method may further include: the first ProSe service component sends the ProSe ID of the target terminal and the discovery resources to a second ProSe service component corresponding to the target terminal; and the second ProSe service component instructs the second base station to assign the discovery resources to the target terminal, wherein the discovery resources are used for enabling the target terminal to discover the source terminal.

Example implementation two: a second ProSe service component corresponding to the target terminal receives the message; and the second ProSe service component instructs a second base station to assign or configure the discovery resources, wherein the discovery resources are used for enabling the source terminal to discover the target terminal. In an example embodiment, after the second ProSe service component instructs the second base station to assign or configure the discovery resources, the method may further include: the second ProSe service component sends the discovery resources to a first ProSe service component corresponding to the source terminal; and the first ProSe service component instructs the first base station to assign the discovery resources to the target terminal, wherein the discovery resources are used for enabling the source terminal to discover the target terminal.

In the above two example implementations, the assignment of resources and the configuration of the assigned resources are involved. In an example embodiment, whether discovery resources have been assigned for a terminal can be judged according to a format of the ProSe ID. If the ProSe ID indicates that the discovery resources have been assigned, then a discovery request is directly forwarded to the ProSe server which assigns the ProSe ID.

In an example embodiment, one of the source terminal and the target terminal may notify the other terminal through the ProSe service component corresponding to the discovering terminal after discovering the other terminal. In an example embodiment, terminal discovery may be implemented by detecting a discovery signal, that is, one of the source terminal and the target terminal detects on the discovery resources a discovery signal sent by the other terminal, so as to discover the other terminal. In an example embodiment, the discovery signal includes at least one of the following: a pilot frequency signal assigned for a terminal by a base station, a ProSe ID of the source terminal, and a ProSe ID of the target terminal.

In one example implementation, the source terminal sends a request which carries a ProSe ID of a target terminal to the ProSe server to request to discover the target terminal; the ProSe server may judge whether discovery resources have been assigned to the target terminal; if no discovery resource is assigned to the target terminal, then the ProSe server instructs the base station to assign discovery resources for the source terminal, and the target terminal notifies the source terminal of a discovery result after detecting the discovery signal of the source terminal; or if discovery resources have been assigned to the target terminal, then the ProSe server directly configures the discovery resources of the target terminal to the source terminal, and the source terminal detects the discovery signal of the target terminal.

In an example embodiment, the base station may assign the discovery resources for the source terminal in the following manner: the ProSe server requests a base station to which the source terminal belongs to assign discovery resources; and the base station to which the source terminal belongs assigns the discovery resources to a source user and returns the assigned discovery resources to the ProSe server. The ProSe server may configure the discovery resources of the source terminal to the target terminal by means of a base station to which the target terminal belongs.

In an example embodiment, the target terminal may notify the source terminal of the discovery result in the following way: the target terminal sends a discovery report to the base station to which the target terminal belongs; the base station to which the target terminal belongs sends the discovery report to the ProSe server; and the ProSe server sends a discovery response to the source terminal to indicate that the target terminal is in a proximity area.

In an example embodiment, the ProSe server may notify the source terminal of the discovery resources of the target terminal in the following way: the ProSe server configures, through the base station to which the source terminal belongs, to the source terminal the discovery resources assigned to the target terminal. In an example embodiment, the discovery resources may include wireless resources for the terminal to send data packets and a discovery signal. The discovery signal preferably includes one of the following: a ProSe ID of the source terminal, a ProSe ID of the target terminal, pilot frequency information assigned by the base station.

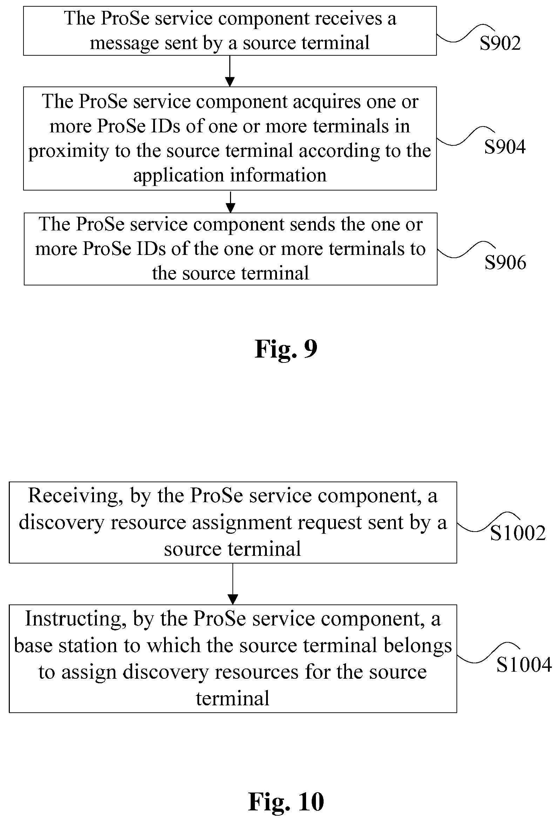

Fig. 9 is flowchart two of a terminal discovery method according to an embodiment of the present disclosure. As shown in Fig. 9, the flow includes the following steps:

Step S902: the ProSe service component receives a message sent by a source terminal, wherein the message carries application information, the application information being used for requesting to discover one or more terminals in proximity to the source terminal;

step S904: the ProSe service component acquires one or more ProSe IDs of one or more terminals in proximity to the source terminal according to the application information; and

step S906: the ProSe service component sends the one or more ProSe IDs of the one or more terminals to the source terminal.

By means of the above-mentioned steps, one or more proximity terminals starting or using the same application as the source terminal can be discovered.

In an example embodiment, the ProSe service component may acquire the ProSe ID associated with the application corresponding to the application information according to the application information; and according to at least one of a latest access cell, a tracking area and a location area of a terminal corresponding to the ProSe ID associated with the application, the ProSe service component acquires the one or more ProSe IDs of the one or more terminals in proximity to the source terminal.

In an example embodiment, in the flow shown in Fig. 9, the following discovery resource processing manner may be adopted: the ProSe service component instructs the base station to which the source terminal belongs to assign discovery resources for the source terminal; the ProSe service component sends the discovery resources to one or more base stations to which one or more terminals belong, and the one or more base stations configure the discovery resources to the one or more terminals, wherein the discovery resources are used for enabling the one or more terminals to discover the discovery signal of the source terminal; and the ProSe service component acquires the one or more ProSe IDs of the one or more terminals in proximity to the source terminal by means of reports sent by one or more terminals which receive the discovery signal.

In an example embodiment, after sending, by the ProSe service component, the one or more ProSe IDs of the one or more terminals to the source terminal, the method may further include: sending, by the source terminal, the one or more ProSe IDs of the one or more terminals to an application server.

In one example implementation, a source ProSe terminal may request the ProSe server to discover a list of neighbouring users, wherein a request message carries application information; the ProSe server obtains an initial list of ProSe IDs according to the application information sent by the terminal; the ProSe server judges whether each target terminal corresponding to each ProSe ID in the initial list of ProSe IDs is in a proximity area to the source ProSe terminal by means of a discovery flow, and generates a final list of ProSe IDs, and the ProSe server returns the final list of ProSe IDs to the terminal; and the terminal sends a request to the application server for application user identifiers corresponding to the ProSe IDs. In an example embodiment, the ProSe server generates the initial list of ProSe IDs of terminals in proximity to the source ProSe terminal according to a latest access cell or a tracking area or a location area of the terminal.

Fig. 10 is flowchart three of a terminal discovery method according to an embodiment of the present disclosure. As shown in Fig. 10, the flow includes the steps of:

Step S1002: receiving, by a ProSe service component, a discovery resource assignment request sent by a source terminal; and

step S1004: instructing, by the ProSe service component, a base station to which the source terminal belongs to assign discovery resources for the source terminal, wherein the discovery resources are used for enabling other terminals to discover the source terminal.

By means of the above-mentioned steps, discovery resources can be assigned for the source terminal, so that the source terminal can be discovered.

In an example embodiment, the ProSe service component may assign a new ProSe ID for the source terminal, wherein the new ProSe includes: information for indicating that discovery resources have been assigned for the source terminal; and the ProSe service component sends the new ProSe ID to the source terminal.

In an example embodiment, ProSe service components corresponding to said other terminals receive request messages sent by said other terminals, wherein the request messages are used for requesting whether the new ProSe ID is in proximity areas of said other terminals; the ProSe service components corresponding to said other terminals determine, according to the new ProSe ID, that the discovery resources have been assigned for the source terminal; and the ProSe service components corresponding to said other terminals instruct base stations to which said other terminals belong to assign the discovery resources to said other terminals. In an example embodiment, the new ProSe ID may be acquired from the application server.

In an example embodiment, the source terminal may be discovered by way of detecting a discovery signal, that is, said other terminals detect on the discovery resources a discovery signal sent by the source terminal, so as to discover the source terminal. In an example embodiment, the discovery signal includes at least one of the following: a pilot frequency signal assigned for a terminal by a base station, and a ProSe ID of the source terminal.

In one example implementation, the source terminal sends a request to the ProSe server for its own discovery resources; the ProSe server instructs the base station to assign discovery resources for the source terminal; and said other terminals discovers the source terminal by detecting the discovery signal of the source terminal.

In an example embodiment, the ProSe server assigns one ProSe ID for the terminal, wherein the ProSe ID is provided with a special flag bit to indicate that the ProSe server has assigned the discovery resources for the user. The ProSe server may return the assigned ProSe ID to the source terminal; and the source terminal sends the ProSe ID to the application server which then stores the ProSe ID. The other terminals obtain the discovery resources of the source terminal from the ProSe server and discover the source terminal by way of detecting the discovery signal of the source terminal.

In an example embodiment, the discovery resources assigned by the base station may be broadcast resources. The source terminal broadcasts the discovery signal thereof and said other terminals discover the source terminal by way of detecting the discovery signal of the source terminal.

The registration process and discovery processes of the terminal are described below in conjunction with several example examples.

In the following several example embodiments, a new function is introduced: a ProSe server, wherein the ProSe server may be arranged in combination with an MME. In addition to the original MME functions, new functions of the ProSe server further include assigning a new identifier ProSe ID for an application on the ProSe terminal. After acquiring the application information from an application server, the terminal needs to register with the ProSe server, and the ProSe server assigns a temporary identifier for the application of the terminal. Different applications have different ProSe IDs, so that the operator can control the applications, e.g., the ProSe discovery can be performed for some applications, while the ProSe discovery is not allowed for some applications. The ProSe ID is similar to a GUTI and also includes a network identifier, a pool identifier, a ProSe server identifier and a user identifier, which enable the addressing of the ProSe server in an EPC network. The assignment of the ProSe ID has no relationship with the user's location. After obtaining the ProSe ID, the terminal needs to register with the application server, and the application server is responsible for associating an application user identifier with the ProSe ID of the terminal, and in this way, the other users can acquire the ProSe ID of this terminal from the application server.

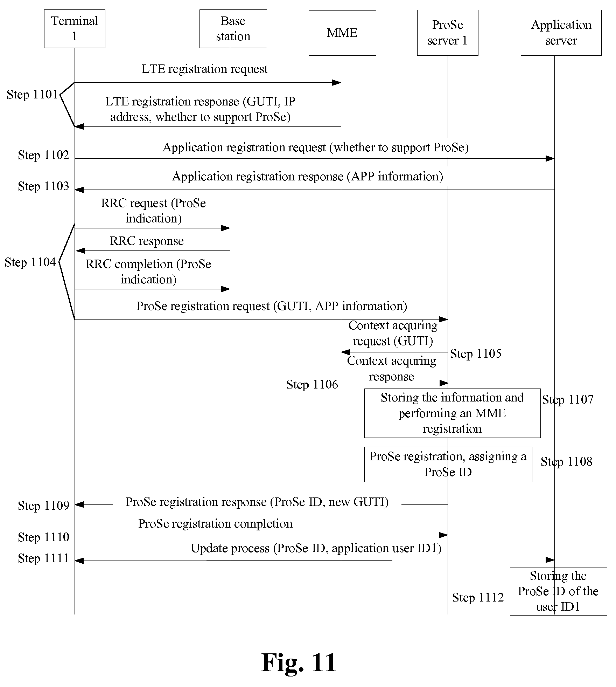

Fig. 11 is a schematic flowchart of registration of a terminal with a ProSe server according to an embodiment of the present disclosure. As shown in Fig. 11, the flow includes the following steps:

Step 1101: the terminal firstly accesses an LTE to perform registration and authorization at an EPC and acquires an IP address from a gateway; and a mobility management element (MME) assigns a temporary identifier GUTI. Applications will subsequently use this IP address to perform communications. In a registration response, the mobility management element (MME) notifies the terminal of an indication of whether the current MME pool supports ProSe service. If the terminal accesses the MME pool by means of a tracking area update (TAU) process, then the MME notifies, in a TAU reception message, the terminal of the indication of whether the current MME pool supports the ProSe service.

Step 1102: a certain application in the terminal starts, and the application registers with a corresponding application server, wherein during the registration, the indication of whether this terminal supports a ProSe service and an application user ID are carried to the application server.

Step 1103: the application server accepts the registration, and if the application server supports the ProSe service, then the application server returns application information to the terminal, the application information identifying the application uniquely, e.g., a unique identifier assigned for the application by the operator. The application information may further include a digital signature of the application.

Step 1104: if the terminal supports the ProSe capability, and the network also supports the ProSe service, then the terminal decides to initiate ProSe registration. The terminal carries a ProSe service indication in a radio resource control (RRC) request or an RRC completion to notify the base station that the service of this time is ProSe registration. The terminal registers with the ProSe server by means of an NAS information which carries the temporary identifier GUTI assigned by the MME and the application information returned by the application server. The NAS information may be carried to the base station in an RRC completion message. The base station learns that this is ProSe registration according to step 1104, then the base station selects one ProSe server, and forwards the NAS message to the ProSe server via an S 1 interface.

Step 1105: after receiving the NAS registration message, the ProSe server firstly finds the MME with which the user registers according to the GUTI carried in the message, then initiates, via an S3 interface, a context request process to the MME, during which process the GUTI of the terminal and the entire NAS registration message are carried to the MME.

Step 1106: the MME firstly finds the corresponding user context according to the GUTI, and directly returns a failure if no user context is found. After finding the user context, the MME performs an integrity check on the NAS registration message, and returns user context information after the check is passed, wherein the returned user context information includes a user unique identifier IMSI, user safety context, user mobility context and user bearer context.

Step 1107: the ProSe server stores relevant information after receiving a context response. The ProSe server performs an MME registration process including an optional authorization progress, a process of registering with an HSS and acquiring subscription data, and a process of reassigning a new GUTI identifier.

Step 1108: the ProSe server checks the digital signature of the application information sent by the terminal so as to ensure the accuracy of the application information, then judges whether the operator allows this application to use a ProSe service according to an application unique identifier in the application information, and if the operator does not allow this application to use a ProSe service, then returns a registration failure message, and if the operator allows this application to use a ProSe service, then assigns one ProSe ID for the registration of this time. The format of the ProSe ID may be similar to that of the GUTI, including network information, pool information, a ProSe server identifier and a temporary identifier unique in the ProSe server, wherein the temporary identifier uniquely identifies this user and this application.

Step 1109: the ProSe server returns an NAS registration response which carries an assigned ProSe ID and a newly assigned GUTI.

Step 1110: the terminal stores the ProSe ID and the new GUTI and returns an NAS registration completion message; and after receiving the message, the ProSe server considers that the registration has been successful and the ProSe ID and the GUTI have been assigned.

Step 1111: the terminal updates the assigned ProSe ID information to the application server, wherein during the update, the newly assigned ProSe ID is carried to the application server.

Step 1112: the application server stores ProSe ID information corresponding to the current application user ID, and returns a response to the terminal.

By means of the above-mentioned flow, the terminal completes the LTE registration and the ProSe registration with the ProSe server, and the ProSe ID and the GUTI are assigned. If the ProSe server and the MME of the last registration are the same MME, then the above-mentioned steps 1105, 1106 and 1107 may not be executed; furthermore, the ProSe server likewise does not need to reassign a new GUTI according to requirements.

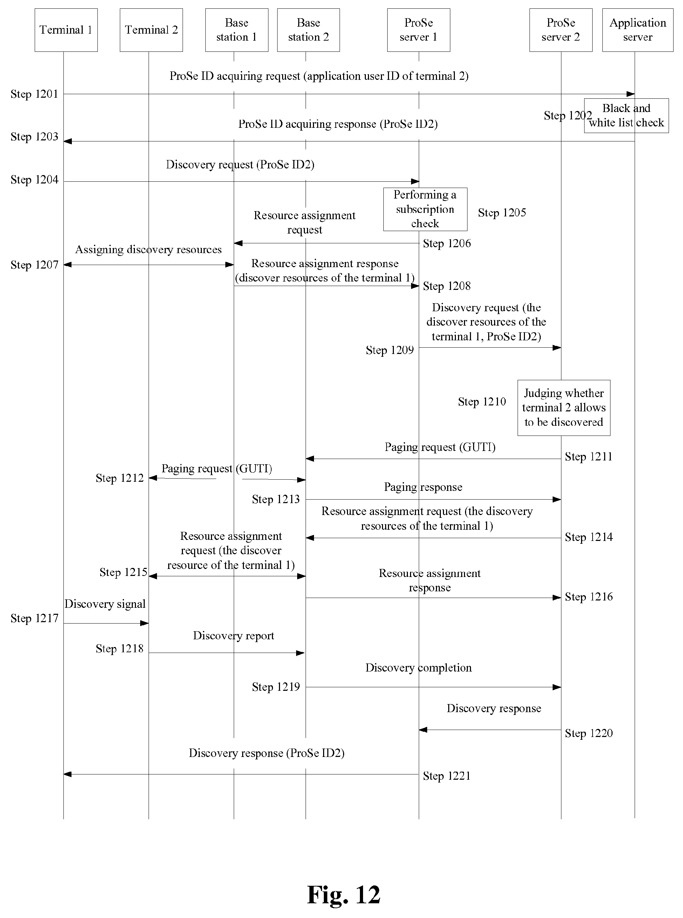

Fig. 12 is a schematic flowchart showing the case where terminal 1 intends to discover whether terminal 2 is in a proximity range according to an embodiment of the present disclosure. The proximity range herein refers to the case where two terminals are near in distance and are capable of implementing ProSe communications. As shown in Fig. 12, the flowchart includes the following steps:

Step 1201: the terminal 1 intends to discover whether the terminal 2 is in a proximity range; the terminal 1 firstly acquires a ProSe ID2 of the terminal 2 from the application server, wherein a request carries an application user identifier of the terminal 2 that can be identified by the application server, such as a QQ number or a Skype account.

Step 1202: if there is a relevant ProSe ID2 stored in correspondence with the terminal 2, then a black and white list check is performed to judge whether the terminal 2 allows to be discovered by the terminal 1, and if the terminal 2 does not allow to be discovered by the terminal 1, then a failure is returned, and if the terminal 2 allows to be discovered by the terminal 1, then the flow continues.

Step 1203: the application server returns the ProSe ID2 of the terminal 2 to the terminal 1.

Step 1204: after obtaining the ProSe ID2, the terminal 1 sends a request to the ProSe server 1 thereof to discover whether the ProSe ID2 is in the proximity range, wherein the request carries the ProSe ID2.

Step 1205: the ProSe server 1 performs a subscription check to judge whether the operator allows the terminal 1 to discover other terminals, and if the operator allows the terminal 1 to discover other terminals, then assigns discovery resources.

Step 1206: the ProSe server 1 sends a request to base station 1 to request the base station 1 to assign the discovery resources.

Step 1207: the base station 1 assigns the discovery resources of the terminal 1. In order to enable the terminal 1 to be discovered, the base station 1 needs to assign resources by which the terminal 1 sends data packets, and the resources by which terminal 1 receives the data packets do not need to be assigned. The discovery resources may also include a pilot frequency signal which is assigned by the base station 1 for the terminal 1, wherein the pilot frequency signal uniquely identifies the terminal 1, and the pilot frequency signal can be carried in the discovery signal to be monitored by the target terminal.

Step 1208: the base station 1 returns the discovery resources assigned for the terminal 1 to the ProSe server 1.

Step 1209: the ProSe ID2 contains information about the ProSe server which assigns the identifier, and thus the ProSe server 1 forwards a discovery request to the ProSe server 2 which assigns the ProSe ID2, which request message carries the ProSe ID2 and the discovery resources of the terminal 1.

Step 1210: the ProSe server 2 firstly judges whether the operator allows the terminal to be discovered by the other terminals, and if the operator allows the terminal to be discovered by the other terminals, then the flow continues; and if the operator does not allow the terminal to be discovered by the other terminals, then a failure message is returned to the ProSe server 1.

Steps 1211-1213: the ProSe server 2 utilizes the GUTI and the latest location information to page the terminal 2. If the ProSe server 2 judges that the terminal is in a connection state, then this step is unnecessary.

Step 1214: after the paging succeeds, the ProSe server 2 sends a request to eNB2 to request the eNB2 to assign resources, and the ProSe server 2 sends the discovery resources of the terminal 1 to the base station 2. Optionally, the ProSe server 2 also carries the ProSe ID1 of the terminal 1 to the base station 2.

Step 1215: the base station 2 assigns resources for the terminal 2. In the present embodiment, the terminal 2 only needs to be discovered by the terminal 1, therefore the base station 2 does not need to newly assign any resources for the terminal 2, but only needs to assign the discovery resources of the terminal 1 to the terminal 2; and optionally, the base station 2 also carries the ProSe ID 1 of the terminal 1 to the terminal 2.

Step 1216: the base station returns a resource assignment response to the ProSe server 2.

Step 1217: the terminal 2 detects the discovery signal sent by the terminal 1 on the assigned discovery resources, wherein the signal may include the ProSe ID of the terminal 1, may also contain the ProSe ID of the terminal 2, and may also be the pilot frequency signal assigned to the terminal 1 by the base station 1.

Step 1218: the terminal 2 sends a discovery report to the base station 2.

Step 1219: the base station 2 sends a discovery completion to the ProSe server 2.

Step 1220: the ProSe server 2 sends a discovery completion to the ProSe server 1.

Step 1221: the ProSe server 1 sends, to the terminal 1, a discovery response which carries the ProSe ID 2 of the discovered terminal.

By means of the above-mentioned process, the terminal 1 discovers that the terminal 2 is within a proximity range.

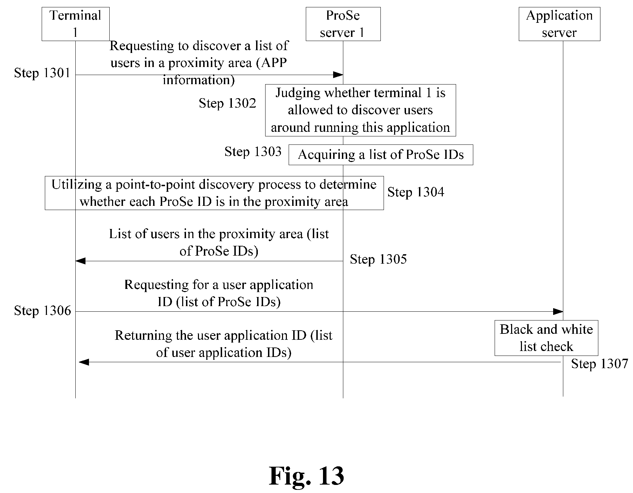

Fig. 13 is a schematic flowchart showing the case where terminal 1 intends to discover all proximity user identifiers relevant to the current application according to an embodiment of the present disclosure. As shown in Fig. 13, the flowchart includes the following steps:

Step 1301: the terminal 1 intends to discover a list of all the users around who are running this application, and then sends to the ProSe server a request for discovering all the users in the proximity area, which request carries the application information of this application.

Step 1302: the ProSe server firstly judges whether this user is allowed by the operator to discover all the users in the proximity area, because the operation may occupy many signalling resources, and the operator may need to perform control thereon; and if this user is allowed by the operator to discover all the users in the proximity area, the flow continues; otherwise, a failure is returned.

Step 1303: the ProSe server firstly finds a list of ProSe IDs associated with this application according to the application information, and performs point-to-point discovery on each ProSe ID so as to judge whether the corresponding terminal is in the proximity area. In an example embodiment, according to information about the user's current latest access location, such as a cell or TA list, the ProSe server may select those ProSe IDs that are more close to the terminal 1.

Step 1304: the ProSe server performs point-to-point discovery on each ProSe ID so as to judge whether the corresponding terminal is in the proximity area. In this process, the terminal 1 only needs to assign discovery resources once, and the ProSe server sends the resources to the base station to which the target terminal belongs and configures the resources to the target terminal. If the target terminal receives the discovery signal of the terminal 1, then the target terminal reports to the ProSe server. The discovery resources of the terminal 1 may be actively released by the terminal, or the release is ensured by the ProSe server by means of a timer.

Step 1305: the ProSe server returns the list of ProSe IDs in the proximity area to the terminal. The ProSe server may return the ProSe IDs one by one, and may also collect several ProSe IDs and then return them, or return the ProSe IDs periodically.

Step 1306: the terminal returns the received list of ProSe IDs to the application server.

Step 1307: the application server judges user IDs corresponding to these ProSe IDs, and then judges whether the user IDs allow to be discovered by their respective terminal, and if the discovery is not allowed, then the corresponding application user ID is not returned; and if the discovery is allowed, then the corresponding application user ID is returned.

By means of the above-mentioned process, the terminal can obtain all proximity user identifiers relevant to this application.

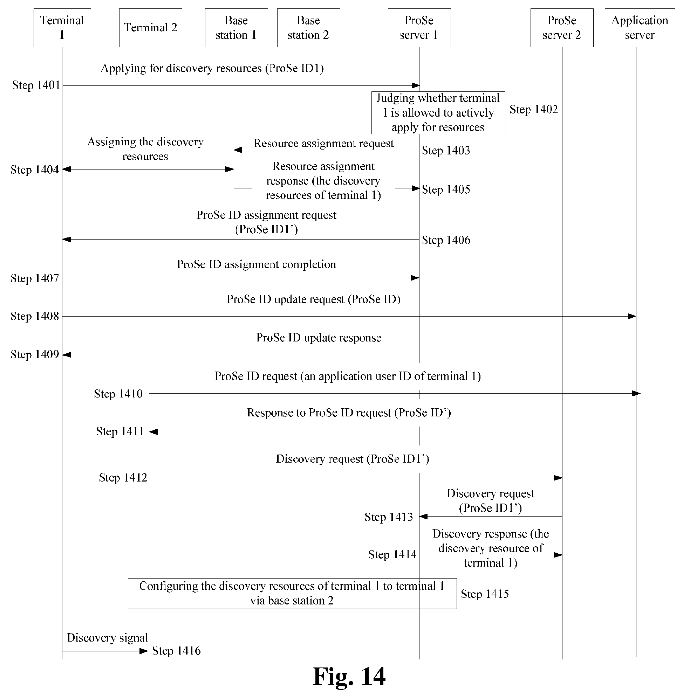

Fig. 14 is a schematic flowchart showing the case where terminal 1 actively applies for discover resources and terminal 2 discovers that terminal 1 is in a proximity range according to an embodiment of the present disclosure. As shown in Fig. 14, the flowchart includes the following steps:

Step 1401: the terminal 1 sends a request to the ProSe server to apply for discovery resources, wherein the request carries an indication of whether broadcast resources or specialized resources are applied.

Step 1402: according to the subscription information, the ProSe server judges whether this terminal is allowed to apply for the discovery resources, and if this terminal is allowed to apply for the discovery resources, then the flow continues; otherwise, a failure is returned.

Step 1403: the ProSe server sends a request to the base station to request the base station to assign the discovery resources.

Step 1404: if the specialized resources are requested, then the base station assigns discovery resources specialized for the terminal. In order to enable the terminal 1 to be discovered, the base station needs to assign resources by which the terminal 1 sends data packets, and the resources by which terminal 1 receives the data packets do not need to be assigned. If the broadcast resources are requested, then the base station assigns broadcast resources for the terminal, and the terminal 1 may initiate a broadcast by itself to notify neighbouring users that the current terminal 1 is waiting for access.

After this step, the terminal 1 can send the discovery signal on the discovery resources, wherein the discovery signal may be the ProSe ID of the terminal 1 and may also be the pilot frequency signal assigned by the base station for the terminal 1.

Step 1405: the base station returns the discovery resources assigned for the terminal 1 to the ProSe server, and the ProSe server stores the discovery resources.

Step 1406: the ProSe server reassigns a ProSe ID' of a special format for the terminal 1, for example, it is specified that a certain flag bit in the ProSe ID is fixed to 1 so as to identify that discovery resources have been assigned for the terminal. The ProSe server reassigns the ProSe ID' to the terminal.

Step 1407: the terminal 1 stores the ProSe ID', and then returns an assignment completion message.

Step 1408: the terminal 1 sends the ProSe ID' to the application server which then stores the ProSe ID'.

Step 1409: the application server returns a response.

Step 1410: the terminal 2 intends to discover whether the terminal 1 is in the proximity area, and requests for the ProSe ID of the terminal 1 from the application server, which request carries an application user ID of the terminal 1.

Step 1411: the application server returns the ProSe ID' of the terminal 1.

Step 1412: the terminal 2 sends a request to the ProSe server 2 to request to discover whether the ProSe ID' is in the proximity area.

Step 1413: the ProSe server 2 knows, according to the special indication in the ProSe ID', that the discovery resources have already been assigned for the terminal, then the discovery resources will no longer be assigned for the terminal 2. The ProSe server 2 forwards the discovery request to the ProSe server 1 which assigns the ProSe ID'.

Step 1414: the ProSe server 1 returns the stored discovery resources of the terminal 1 to the ProSe server 2.

Step 1415: the ProSe server 2 assigns the discovery resources of the terminal 1 to the terminal 2 through the base station 2 of the terminal 2.

Step 1416: the terminal 2 discovers the terminal 1 by detecting, on the specialized discovery resources or broadcast resources of the terminal 1, the discovery signal sent by the terminal 1.

By means of the above-mentioned process, the terminal 1 firstly requests for assigning the discovery resources; when the terminal 2 requests to discover the terminal 1, it is not needed to assign the discovery resources for the terminal 2, and the terminal 2 can use the discovery resources of the terminal 1 to discover that the terminal 1 is in the proximity area. In this flow, since the discovery resources of the terminal 1 are always occupied, the resource utilization rate may be not high, but the benefit is that the base station does not need to assign discovery resources for the terminal 2.

The above embodiments are not limited to the LTE and EPC architectures, but can also be applied to 2G and 3G packet networks so as to implement the ProSe discovery function, and the modifications to the 2G and 3G packet networks are similar.

Obviously, those skilled in the art shall understand that the above-mentioned components and steps of the present disclosure can be implemented by using general purpose calculating device, can be integrated in one calculating device or distributed on a network which consists of a plurality of calculating devices. Alternatively, the components and the steps of the present disclosure can be implemented by using the executable program code of the calculating device. Consequently, they can be stored in the storing device and executed by the calculating device, or they are made into integrated circuit component respectively, or a plurality of components or steps thereof are made into one integrated circuit component. In this way, the present disclosure is not restricted to any particular hardware and software combination.

The above description is only example embodiments of the present disclosure and is not intended to limit the present disclosure, and the present disclosure can have a variety of changes and modifications for ordinary person skilled in the field. Any amendments, equivalent substitutions, improvements, etc. within the principle of the present disclosure are all included in the scope of the protection as defined by the appended claims of the present disclosure.

### Industrial applicability

The technical solution provided in the embodiments of the present disclosure can be applied to the field of communications, and by setting a ProSe service component, the support for ProSe services is provided in the aspect of network architecture.

## Claims

1. A terminal registration method, **characterized by** comprising:
receiving, by a proximity-based service, ProSe, service component, a message which is sent by a terminal and used for performing ProSe registration, wherein the message carries application information of the terminal, the application information comprising information for identifying an application; and
assigning, by the ProSe service component, a proximity service identifier, ProSe ID, and sending the ProSe ID to the terminal.

2. The method according to claim 1, **characterized in that** the ProSe service component is a mobility management element, MME, which supports a ProSe service, in an MME pool.

3. The method according to claim 1, **characterized in that**, before receiving, by the ProSe service component, the message which is sent by the terminal and used for performing the ProSe registration, the method further comprises:
receiving, by a base station, a non-access stratum, NAS, message sent by the terminal, wherein the base station learns, in the a radio resource control, RRC, process, that the NAS message is a message used for performing the ProSe registration; and
selecting, by the base station, one ProSe service component, and sending the NAS message to the ProSe service component via an interface between the base station and the selected ProSe service component.

4. The method according to claim 1, **characterized in that**, before receiving, by the ProSe service component, the message which is sent by the terminal and used for performing the ProSe registration, the method further comprises:
acquiring, by the terminal, the application information from an application server.

5. The method according to claim 4, **characterized in that** acquiring, by the terminal, the application information from the application server comprises:
sending, by the terminal in the case where the application starts, a registration message to the application server, wherein the registration message carries an application user identifier; and
receiving, by the terminal, the application information which is sent by the application server after the terminal registration is accepted.

6. The method according to claim 1, **characterized in that**, before receiving, by the ProSe service component, the message which is sent by the terminal and used for performing the ProSe registration, the method further comprises:
acquiring, by the terminal, information indicating whether an MME pool supports a ProSe service.

7. The method according to claim 6, **characterized in that** acquiring, by the terminal, the information indicating whether the MME pool supports the ProSe service comprises:
receiving, by the terminal, a registration response message or tracking area update message sent by the MME, wherein the registration response message or the tracking area update message carries the information indicating whether the MME pool supports the ProSe service.

8. The method according to claim 1, **characterized in that** assigning, by the ProSe service component, the ProSe ID comprises:
judging, by the ProSe service component according to the information for identifying the application, whether an operator allows the application to use a ProSe service; and
assigning, by the ProSe service component in the case where a judgement result is that the operator allows the application to use the ProSe service, the ProSe ID.

9. The method according to any one of claims 1-8, **characterized in that**, after sending, by the ProSe service component, the ProSe ID to the terminal, the method further comprises:
acquiring, by an application server, the ProSe ID, and associating and storing the ProSe ID and an acquired application user identifier of the terminal.

10. The method according to any one of claims 1-8, **characterized in that** the ProSe ID comprises at least one of the following:
a network identifier, an MME pool identifier, an identifier which uniquely identifies the ProSe service component in an MME pool, an identifier which uniquely identifies a user in the ProSe service component, and an identifier which uniquely identifies the application in user context.

11. The method according to claim 10, **characterized in that** the ProSe ID further comprises indication information indicating whether discovery resources have been assigned for the terminal corresponding to the ProSe ID.

12. A terminal discovery method, **characterized by** comprising:
receiving a message by which a source terminal requests to discover a target terminal, wherein the message carries a proximity-based service identifier, ProSe ID, of the target terminal; and
instructing a first base station to which the source terminal belongs and/or a second base station to which the target terminal belongs to assign discovery resources or configure discovery resources that have already been assigned, wherein the discovery resources are used for enabling one of the source terminal and the target terminal to discover the other terminal.

13. The method according to claim 12, **characterized in that** receiving the message and instructing the first base station and/or the second base station to assign or configure the discovery resources comprises:
receiving, by a first ProSe service component corresponding to the source terminal, the message; and
instructing, by the first ProSe service component, the first base station to assign or configure the discovery resources, wherein the discovery resources are used for enabling the target terminal to discover the source terminal.

14. The method according to claim 13, **characterized in that**, after instructing, by the first ProSe service component, the first base station to assign or configure the discovery resources, the method further comprises:
sending, by the first ProSe service component, the ProSe ID of the target terminal and the discovery resources to a second ProSe service component corresponding to the target terminal; and
instructing, by the second ProSe service component, the second base station to assign the discovery resources to the target terminal, wherein the discovery resources are used for enabling the target terminal to discover the source terminal.

15. The method according to claim 12, **characterized in that** receiving the message and instructing the first base station and/or the second base station to assign or configure the discovery resources comprises:
receiving, by a second ProSe service component corresponding to the target terminal, the message; and
instructing, by the second ProSe service component, the second base station to assign or configure the discovery resources, wherein the discovery resources are used for enabling the source terminal to discover the target terminal.

16. The method according to claim 15, **characterized in that**, after receiving the message and instructing, by the second ProSe service component, the second base station to assign or configure the discovery resources, the method further comprises:
sending, by the second ProSe service component, the discovery resources to a first ProSe service component corresponding to the source terminal; and
instructing, by the first ProSe service component, the first base station to assign the discovery resources to the source terminal, wherein the discovery resources are used for enabling the source terminal to discover the target terminal.

17. The method according to any one of claims 12-16, **characterized in that** the method further comprises: judging whether the discovery resources have been assigned for the terminal according to a format of the ProSe ID.

18. The method according to any one of claims 12-16, **characterized in that**, after instructing the first base station and/or the second base station to assign or configure the discovery resources, the method further comprises:
after one of the source terminal and the target terminal discovers the other terminal, notifying, by the discovering terminal, the discovered terminal through a ProSe service component corresponding to the discovering terminal.

19. The method according to any one of claims 12-16, **characterized in that** one of the source terminal and the target terminal discovering the other terminal comprises:
discovering, by one of the source terminal and the target terminal, the other terminal by detecting on the discovery resources a discovery signal sent by the other terminal.

20. The method according to claim 19, **characterized in that** the discovery signal comprises at least one of the following: a pilot frequency signal assigned for a terminal by a base station, a ProSe ID of the source terminal, and a ProSe ID of the target terminal.

21. A terminal discovery method, **characterized by** comprising:
receiving, by a proximity-based service, ProSe, service component, a message sent by a source terminal, wherein the message carries application information, the application information being used for requesting to discover one or more terminals in proximity to the source terminal;
acquiring, by the ProSe service component according to the application information, one or more proximity-based service identifiers, ProSe ID, of one or more terminals in proximity to the source terminal; and
sending, by the ProSe service component, the one or more ProSe IDs of the one or more terminals to the source terminal.

22. The method according to claim 21, **characterized in that** acquiring, by the ProSe service component according to the application information, the one or more ProSe IDs of the one or more terminals in proximity to the source terminal comprises:
acquiring, by the ProSe service component according to the application information, a ProSe ID associated with an application corresponding to the application information; and
acquiring, by the ProSe service component according to at least one of a latest access cell, a tracking area and a location area of a terminal corresponding to the ProSe ID associated with the application, the one or more ProSe IDs of the one or more terminals in proximity to the source terminal.

23. The method according to claim 21, **characterized in that** acquiring, by the ProSe service component according to the application information, the one or more ProSe IDs of the one or more terminals in proximity to the source terminal comprises:
instructing, by the ProSe service component, a base station to which the source terminal belongs to assign discovery resources for the source terminal;
sending, by the ProSe service component, the discovery resources to one or more base stations to which the one or more terminals belong, and configuring, by the one or more base stations, the discovery resources to the one or more terminals, wherein the discovery resources are used for enabling the one or more terminals to detect a discovery signal of the source terminal; and
acquiring, by the ProSe service component, the one or more ProSe IDs of the one or more terminals in proximity to the source terminal by means of reports sent by one or more terminals which receive the discovery signal.

24. The method according to any one of claims 21-23, **characterized in that**, after sending, by the ProSe service component, the one or more ProSe IDs of the one or more terminals to the source terminal, the method further comprises:
sending, by the source terminal, the one or more ProSe IDs of the one or more terminals to an application server.

25. A terminal discovery method, **characterized by** comprising:
receiving, by a proximity-based service, ProSe, service component, a discovery resource assignment request sent by a source terminal; and
instructing, by the ProSe service component, a base station to which the source terminal belongs to assign discovery resources for the source terminal, wherein the discovery resources are used for enabling other terminals to discover the source terminal.

26. The method according to claim 25, **characterized in that** the method further comprises:
assigning, by the ProSe service component, a new proximity-based service identifier, ProSe ID, for the source terminal, wherein the new ProSe ID comprises: information for indicating that discovery resources have been assigned for the source terminal; and
sending, by the ProSe service component, the new ProSe ID to the source terminal.

27. The method according to claim 26, **characterized in that** the method further comprises:
receiving, by ProSe service components corresponding to said other terminals, request messages sent by said other terminals, wherein the request messages are used for requesting whether the new ProSe ID is in proximity areas of said other terminals;
determining, by the ProSe service components corresponding to said other terminals according to the new ProSe ID, that the discovery resources have been assigned for the source terminal; and
instructing, by the ProSe service components corresponding to said other terminals, base stations to which said other terminals belong to assign the discovery resources to said other terminals.

28. The method according to claim 27, **characterized in that**, before receiving, by the ProSe service components corresponding to said other terminals, the request messages sent by said other terminals, the method further comprises:
acquiring, by said other terminals, the new ProSe ID from the application server.

29. The method according to any one of claims 25-28, **characterized in that** discovering the source terminal by said other terminals comprises:
discovering, by said other terminals, the source terminal by detecting on the discovery resources a discovery signal sent by the source terminal.

30. The method according to claim 29, **characterized in that** the discovery signal comprises at least one of the following: a pilot frequency signal assigned for a terminal by a base station, and a ProSe ID of the source terminal.

31. A service device, **characterized by** comprising:
a registration component, configured to accept registration of a terminal, assign a proximity-based service identifier, ProSe ID, for the terminal, and associate application information of the terminal with the ProSe ID, wherein the application information comprises information for identifying an application; and
a discovery component, configured to instruct a base station to assign discovery resources for the terminal, and send a discovery result, wherein the discovery resources are used for discovery between terminals.

32. The service device according to claim 31, **characterized in that** the discovery component is further configured to store the discovery resources, and return the discovery resources when receiving a request.

33. The service device according to claim 31, **characterized in that** the registration component is further configured to check a digital signature of application information provided by the terminal.

34. The service device according to claim 31, **characterized in that** the registration component is further configured to verify whether an application corresponding to the application information allows a ProSe service.

35. The service device according to claim 31, **characterized in that** the discovery result comprises: a list composed of one or more ProSe IDs associated with the application information, wherein the one or more ProSe IDs in the list are determined according to location information of a terminal.

36. The service device according to any one of claims 31-35, **characterized in that** the service device is a mobility management element, MME, which supports a ProSe service.

37. An application server, **characterized by** comprising:
a registration component, configured to return application information during register of a terminal, wherein the application information comprises information for identifying an application; and
a storage component, configured to store a corresponding relationship between an application user identifier of the application and a proximity-based service identifier, ProSe ID, and return the application user identifier and/or the ProSe ID according to a request of the terminal.

38. The application server according to claim 37, **characterized in that** the application information further comprises: a digital signature.

39. A base station, **characterized by** comprising:
an assignment component, configured to receive an instruction from a proximity-based service, ProSe, service component and assign discovery resources for a terminal, wherein the instruction is used for instructing the base station to assign the discovery resources, and the discovery resources are used for discovery between terminals; and/or
a configuration component, configured to configure the discovery resources received from the ProSe service component to the terminal.

40. The base station according to claim 39, **characterized in that** the discovery resources are used for sending a discovery signal, wherein a terminal is discovered by detecting the discovery signal.

41. The base station according to claim 40, **characterized in that** the discovery signal comprises at least one of the following: a pilot frequency signal assigned for a terminal by a base station, and a ProSe ID of the terminal.

42. The base station according to claim 39, **characterized in that** the base station further comprises: a sending component, configured to receive a message used for performing ProSe registration from the terminal in an RRC process, select one ProSe service component and forward the message used for performing the ProSe registration to the selected ProSe service component.

43. A terminal, **characterized by** comprising:
a registration component, configured to register with a proximity-based service, ProSe, service component according to application information, wherein the application information comprises information for identifying an application; and
a storage component, configured to store a proximity-based service identifier, ProSe ID, assigned by the ProSe service component.

44. The terminal according to claim 43, **characterized in that** the terminal further comprises: an acquisition component, configured to acquire, from an application server, at least one of the following: a ProSe ID corresponding to a target terminal, and an application user identifier corresponding to a target terminal.

45. The terminal according to claim 43, **characterized in that** the terminal further comprises: a sending component, configured to send the ProSe ID to an application server.
